# EUROPEAN PATENT APPLICATION

(11) **EP 1 764 679 A1**
(43) Date of publication of application: **21.03.2007**
(21) Application number: 05745887.9
(22) Date of filing: 31.05.2005
(51) Int. Cl.: G06F 3/12, B41J 29/38

(54) **PRINTING APPARATUS, AND FIRMWARE UPDATING METHOD THEREFOR**

(30) Priority: 24.06.2004 JP 2004186843
(71) Applicant: MATSUSHITA ELECTRIC INDUSTRIAL CO., LTD., Osaka 571-8501 (JP)
(72) Inventor: TAKAMATSU, Ryuichiro Mat. Elec. Ind. Co. Ltd., IPR, Chuo-ku, Osaka-shi, Osaka 540-6319 (JP); MURATA, Kazuyuki Mat. Elec. Ind. Co., Ltd., IPROC, Chuo-ku, Osaka-shi, Osaka 540-6319 (JP); KUWANO, Hideyuki Mat. Elec. Ind. Co., Ltd., IPROC, Chuo-ku, Osaka-shi, Osaka 540-6319 (JP)
(74) Representative: Balsters, Robert
(86) International application number: PCT/JP2005/009930
(87) International publication number: WO 2006/001157

(57) **Abstract**

The present invention has an objective to provide a printing apparatus capable of updating firmware.

The printing apparatus according to the present invention is a printing apparatus connected to an external device that can instruct printing of image data, said printing apparatus includes: an obtainment unit which obtains at least one of image data and firmware data, the firmware data being required for updating firmware; a judgment unit which judges whether to update firmware or to print image data; and an execution unit which updates the firmware using the firmware data obtained by said obtainment unit, in the case where said judgment unit judges that the firmware should be updated, and which prints the image data obtained by said obtainment unit, in the case where said judgment unit judges that the image data should be printed.

## Description

### Technical Field

The present invention relates to a printing apparatus, and particularly to a technology for updating printing apparatus firmware.

### Background Art

In recent years, networking has been advancing even for household devices, and linkages between devices is widely carried out through wired and wireless communication means or transportable recording media (bridge media), and so on. As one of such configurations, there exists a configuration which links a device having a screen such as a digital television, and a printing apparatus such as a network printer.

More specifically, image data obtained through the shooting of a digital camera, and the like, is recorded on a memory card, and such memory card is inserted into a memory card slot of a digital television. After being displayed on the screen of the digital television, the image data recorded on the memory card is transmitted to a printer together with a print instruction, and is printed.

Incidentally, version upgrades of communication data formats and communication protocols are constantly being undertaken. In order to enable a printer to respond to such new structures, it is necessary to update the firmware written in a ROM of the printer.

There are several methods for updating firmware. For example, there is a method in which data required for updating firmware (hereinafter referred to as "firmware data") is transmitted to the printer from a personal computer (PC) which is in a network. Furthermore, there is a method in which a user interface (UI) is provided to facilitate firmware updating by the printer itself, and firmware data is downloaded from an external network such as the Internet according to operating instructions from the UI. In addition, there is a method in which the printer regularly accesses, using a communication means, a server on an external network such as the Internet, and downloads firmware data. Furthermore, for a printer equipped with an optical disk drive, it is possible to update firmware data by reading-out firmware data recorded on an optical disc (see patent reference 1 for example).
Patent Reference 1: Japanese Laid-open Patent Application No. 2004-127386 Publication

### Disclosure of Invention

### Problems that Invention is to Solve

However, in order to update firmware using a PC, there must be a PC existing in the network. In other words, in the case where there is no PC in the network, such updating method cannot be adopted.

Furthermore, in order to update firmware according to operating instructions from a UI, the printer must be equipped with a UI for updating firmware. In other words, in the case where the printer is not equipped with the UI for updating firmware, such updating method cannot be adopted.

Furthermore, in order to update firmware by regularly accessing a server, the printer must be connected to an external server such as the Internet. In other words, in the case where the printer is not connected to an external server such as the Internet, such updating method cannot be adopted.

Furthermore, in order to update firmware using recording media such as an optical disc, the printer must be equipped with a means for reading the recording medium, such as an optical disk drive and a memory card slot. In other words, in the case where the printer is not equipped with means for reading the recording medium, such updating method cannot be adopted.

The present invention is conceived to solve the aforementioned problem, and has as an objective to provide a printing apparatus capable of updating firmware even in the case where a PC does not exist in the network, a UI for updating firmware is not provided, there is no connection to an external network such as the Internet, and a means for reading a recording medium is not provided.

### Means to Solve the Problems

In order to achieve the aforementioned objective, the printing apparatus according to the present invention is a printing apparatus connected to an external device that can instruct printing of image data, said printing apparatus includes: an obtainment unit which obtains at least one of image data and firmware data, the firmware data being required for updating firmware; a judgment unit which judges whether to update firmware or to print image data; and an execution unit which updates the firmware using the firmware data obtained by said obtainment unit, in the case where said judgment unit judges that the firmware should be updated, and which prints the image data obtained by said obtainment unit, in the case where said judgment unit judges that the image data should be printed. Accordingly, it is possible to update the firmware of the printing apparatus by having the external device instruct the printing apparatus to print image data. In other words, even in the case where a PC does not exist in the network, a UI for updating firmware is not provided, there is no connection to an external network such as the Internet, and a means for reading a recording medium is not provided, it is possible to update the firmware of the printing apparatus.

To be specific, the printing apparatus according to Claim 1, further includes: a reception unit which receives, from said external device, print content description data which is data written in a language that can be analyzed by said printing apparatus; and an analyzing unit which analyzes the print content description data. The judgment unit judges that the firmware should be updated in the case where the analysis by said analyzing unit indicates that a description stating that image data having a special filename should be obtained is included in the print content description data, and judges that the image data should be printed in the case where the analysis by said analyzing unit indicates that a description stating that image data having a special filename should be obtained is not included in the print content description data. The obtainment unit obtains firmware data having a predetermined filename instead of the image data having the special filename in the case where it is judged that the firmware should be updated, and obtains image data having a filename described in the print content description data in the case where it is judged that the image data should be printed. Accordingly, it is possible to update the firmware of the printing apparatus by having the external device instruct printing of the image data having a special filename to the printing apparatus.

Here, the obtainment unit may derive an access path to the firmware data having the predetermined filename, using an access path to the image data having the special filename. Accordingly, for example, in the case where firmware data exists in the same directory as the image data having the special filename, the firmware data having a predetermined filename can be accessed by changing the filename included in the access path to the image data having the special filename.

The execution unit may print the image data having the special filename in the case where the obtainment of the firmware data having a predetermined filename fails. Accordingly, in the case where the obtainment of the firmware data fails, the user immediately becomes aware of the failure in updating the firmware as the image data having the special filename is printed out.

Furthermore, the image data having the special filename may be image data regarding firmware updating. Accordingly, it is possible to display a message regarding the updating of the firmware on the external device, and prompt the user to update the firmware.

The printing apparatus may further include: a reception unit which receives, from said external device, print content description data which is data written in a language that can be analyzed by said printing apparatus; and an analyzing unit which analyzes the print content description data. The obtainment unit obtains image data in the case where the analysis of said analyzing unit indicates that a description stating that the image data should be obtained is included in the print content description data. The judgment unit judges that the firmware should be updated in the case where firmware data is added in the obtained image data, and judges that the obtained image data should be printed in the case where firmware data is not added in the obtained image data. Accordingly, the image data is transmitted, along with the firmware data, from the external device to the printing apparatus. In other words, it becomes possible to update the firmware of the printing apparatus by having the external device instruct the printing apparatus to print the image data.

Moreover, the present invention can be realized, not only as the aforementioned printing apparatus, but also as a printing apparatus firmware updating method having the characteristic units of the aforementioned printing apparatus as steps, and also as a program causing a computer to execute such steps. In addition, it goes without saying that such a program can be distributed via a recording medium such as a CD-ROM, and via a transmission medium such as the Internet.

### Effects of the Invention

As made clear from the preceding explanation, according to the present invention, it is possible to update the firmware of the printing apparatus with the use of the printing application already equipped in the external device, without making any changes to the functions of such printing application. Stated differently, it is possible to update the firmware of the printing apparatus using the external device which is completely unaware of circumstances regarding the firmware updating. Therefore, even in the case where a PC does not exist in the network, a UI for updating firmware is not provided, there is no connection to an external network such as the Internet, and a means for reading a recording medium is not provided, it is possible to update the firmware of the printing apparatus.

### Brief Description of Drawings

FIG. 1 is a diagram showing a usage environment of a printing system in the first embodiment.
FIG. 2 is a perspective illustration of a printer in the first embodiment.
FIG. 3 is a function block diagram of a printing system in the first embodiment.
FIG. 4 is a diagram showing an example of print content description data generated by a print content description data generation unit.
FIG. 5 is a flowchart showing the operation of a printer in the present embodiment.
FIG. 6 is a diagram showing the appearance of a display of an image display unit of a digital television.
FIG. 7 is a diagram showing an example of a directory structure inside a memory card.
FIG. 8 is a diagram showing an appearance of a display of an image display unit of a digital television.
FIG. 9 is a diagram showing an example of print content description data written in XHTML-Print.
FIG. 10 is a function block diagram of a printing system in the second embodiment.
FIG. 11 is a diagram showing the structure of a special JPEG file in the second embodiment.

### Numerical References

- 100: Digital television
- 101: Memory card
- 102: Memory card slot
- 103: Memory card I/F unit
- 104: Remote control reception unit
- 105: Image display unit
- 106: Application program execution unit
- 107: Print content description data generation unit
- 108: Communication unit
- 200, 600: Printer
- 201: Communication unit
- 202: Print content description data analysis unit
- 203, 603: Layout unit
- 204, 604: Image data development unit
- 205: Filename judgment unit
- 206, 606: Firmware updating unit
- 207: Control unit
- 208: Print data generation unit
- 209: Printing unit

### Best Mode for Carrying Out the Invention

Hereinafter, the embodiments of the present invention shall be explained in detail with reference to the diagrams.

### (First Embodiment)

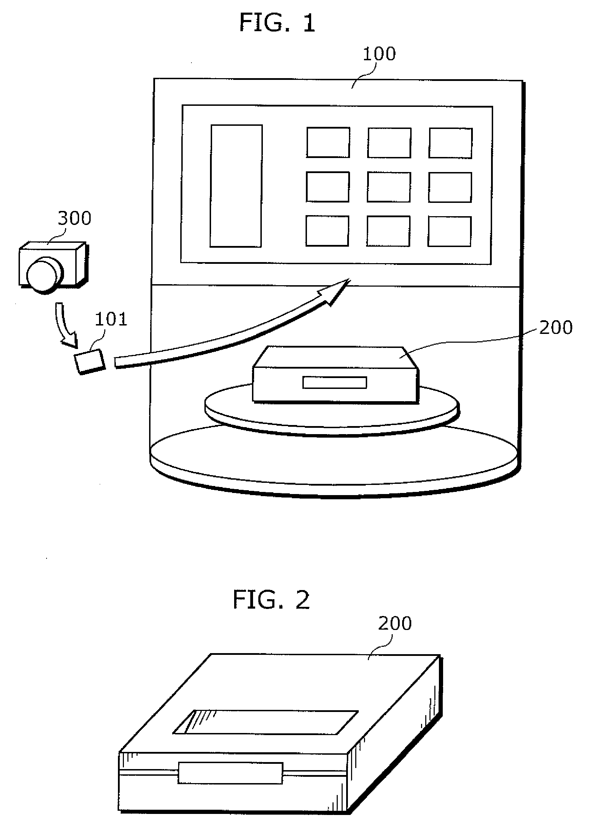

FIG. 1 is a diagram showing a usage environment of a printing system in the first embodiment. As shown in FIG. 1, the printing system in the first embodiment includes a digital television 100 and a printer 200. Here, explanation is carried out under the premise that the digital television 100 and the printer 200 communicate over the Internet (registered trademark) using TCP/IP and HTTP.

A memory card 101 is a transportable recording medium in which image data and the like, obtained through the shooting of a digital camera 300, is recorded. FIG. 1 shows the state in which the image data recorded on the memory card 101 is read-out and displayed on screen as a tabulated list, in the digital television 100. In this state, when a print instruction for a random image displayed on the screen is given using a remote control or the like not shown in the diagram, such image data is printed out from the printer 200. In this manner, explanation is thus carried out under the premise that an image printing application program (hereinafter referred to as "printing application") is equipped in the digital television 100.

FIG. 2 is a perspective illustration of the printer 200 in the first embodiment. As shown in FIG. 2, the printer 200 is not equipped with a UI for updating firmware, and furthermore, does not include a means for reading a recording medium. In addition, the printer 200 is connected only with the digital television 100, and a PC does not exist in this network. Additionally, it is assumed that the printer 200 is not connected to an external network such as the Internet.

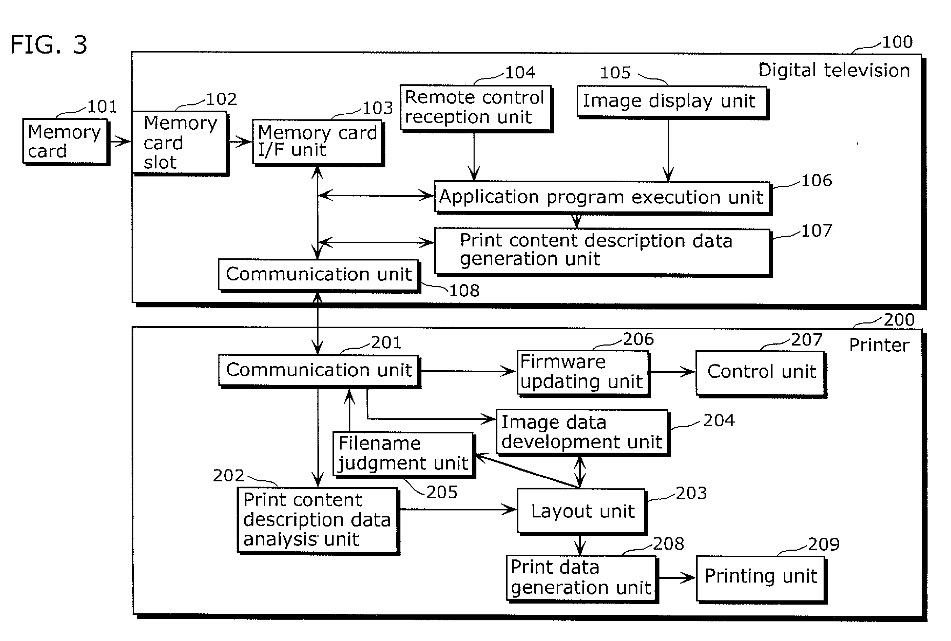

FIG. 3 is a function block diagram of the printing system in the first embodiment.

Along with being an apparatus which receives digital broadcast waves and displays such digital broadcast, the digital television 100 is an apparatus which has a function for instructing the printer 200 to print image data. The digital television 100 includes a memory card slot 102, a memory card interface unit 103, a remote control reception unit 104, an image display unit 105, an application program execution unit 106, a print content description data generation unit 107, and a communication unit 108. Note that explanation regarding component elements related to digital broadcast viewing is omitted as these are of no concern to the present embodiment.

The memory card 101 is inserted in the memory card slot 102. The memory card interface 103 accesses image data recorded on the memory card 101, when the memory card 101 is inserted in the memory card slot 102. The application program execution unit 106 includes a viewer function for displaying image data on the image display unit 105, and a function for instructing the printer 200 to perform the picture printing of image data. The print content description data generation unit 107 generates print content description data in a print content description language that can be analyzed by the printer 200, based on data outputted from the application program execution unit 106. Upon receiving a print instruction from a remote control (not shown) of the digital television 100 through the remote control reception unit 104, the application program execution unit 106 sends data necessary for generating print content description data to the print content description data generation unit 107. The print content description data generation unit 107 generates print content description data based on the data from the application program execution unit 106.

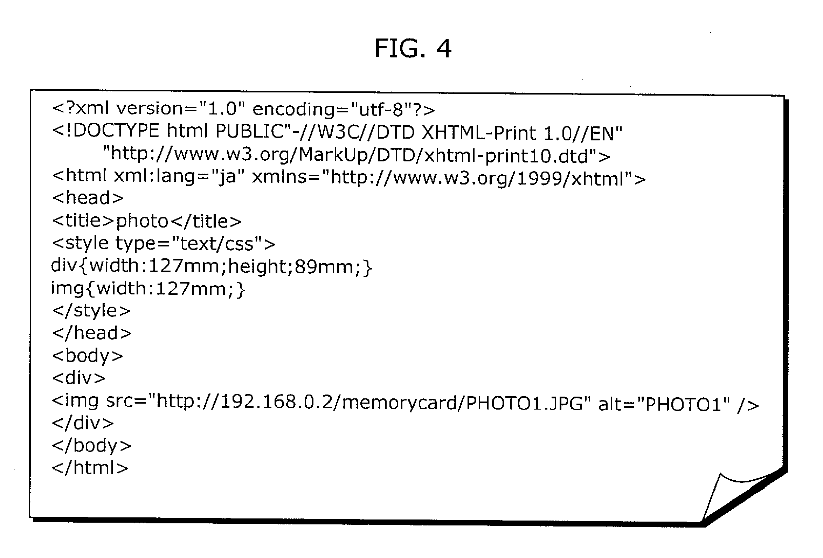

FIG. 4 is a diagram showing an example of print content description data generated by the print content description data generation unit 107. Here, XHTML-Print is adopted as the description language for generating print content description data. The print content description data generation unit 107 sends the generated print content description data to the communication unit 108. Through a network, the communication unit 108 transmits and receives data to and from network-connected devices such as the printer 200.

Next, explanation is carried out regarding the printer 200 in the present embodiment. The printer 200 is an apparatus which generates print data based on print content description data, and outputs the generated print data onto paper. The printer 200 includes a communication unit 201, a print content description data analysis unit 202, a layout unit 203, an image data development unit 204, a filename judgment unit 205, a firmware updating unit 206, a control unit 207, a print data generation unit 208, and a printing unit 209.

The communication unit 201 is a component which sends and receives data between network-connected devices such as the digital television 100. It sends data to the respective units according to the type of the data received. More specifically, when it receives print content description data, the communication unit 201 sends such print content description data to the print content description data analysis unit 202. Furthermore, when it receives image data, the communication unit 201 sends such image data to the image data development unit 204. Furthermore, when firmware data for the printer 200 is received, it sends such firmware data to the firmware updating unit 206. In addition, in the case where it receives, from the printer 200, an obtainment request for a file found on the network, that can be referred to (also called hereinafter as "external file"), the communication unit 201 sends the external file obtainment request to the network-connected devices, and receives replies for the request.

Upon receiving print content description data from the communication unit 201, the print content description data analysis unit 202 sequentially analyzes such print content description data, and sends the analysis result to the layout unit 203.

The layout unit 203 determines the layout of print data based on the analysis result from the print content description data analysis unit 202. Here, when a description stating that an external file should be referred to is included in the print content description data, the obtainment request for the relevant external file is sent to the filename judgment unit 205. The "description stating that an external file should be referred to" mentioned here also includes a description stating that an external CSS (Cascading Style Sheet) file should be referred to.

Upon receiving image data from the communication unit 201, the image data development unit 204 performs format analysis, decoding, and image processing with respect to such image data.

In the case where an obtainment request for an external file is received from the layout unit 203, the filename judgment unit 205 judges whether or not the filename of the object to be obtained is a special filename [_UPDATE.JPG]. This filename [_UPDATE.JPG] is merely one example, and can be randomly set by the designer of the printer 200.

Upon receiving firmware data from the communication unit 201, the firmware updating unit 206 updates the firmware of a ROM inside the control unit 207 to be discussed later.

The control unit 207 includes a ROM in which firmware is stored. The control unit 207 controls the respective units within the printer 200, according to the firmware stored in the ROM.

The print data generation unit 208 generates print data based on layout information determined by the layout unit 203 and image data developed by the image data development unit 204. The generated print data eventually becomes a bit image and is sent to the printing unit 209.

The printing unit 209 outputs, on paper, the bit image print data generated by the print data generation unit 208.

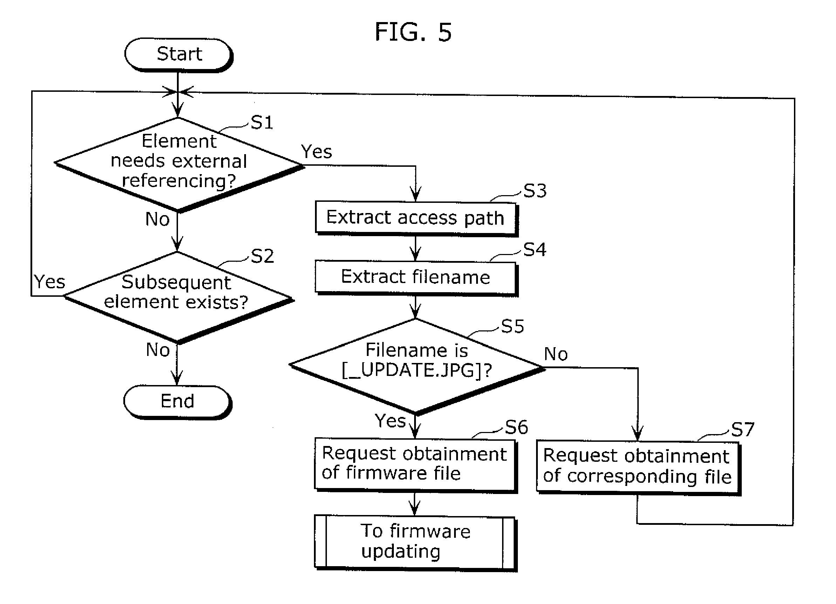

FIG. 5 is a flowchart showing the operation of the printer 200 in the present embodiment. Hereinafter, the structure of the printing system in the present embodiment shall be explained together with its operation using FIG. 5.

First, the operation in the case where image data is printed out shall be explained.

Now, it is assumed that image data obtained through the shooting of a digital camera is recorded on the memory card 101. At this point, when the user inserts the memory card 101 into the memory card slot 102 of the digital television 100, the application program execution unit 106 is executed. Subsequently, the user gives an instruction to the application program execution unit 106 through the manipulation of a remote control and the like not shown in the diagram.

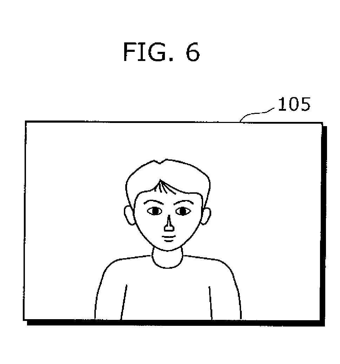

FIG. 6 is a diagram showing the appearance of a display of the image display unit 105 of the digital television 100. Here, the diagram shows the appearance of image data obtained through the shooting of the digital camera being displayed on the image display unit 105, according to the application program execution unit 106. In this state, it is assumed that the user instructs the application program execution unit 106 to perform picture printing of the image data displayed on the image display unit 105.

With this, the application program execution unit 106 instructs the print content description data generation unit 107 to generate the print content description data for picture printing. Upon receiving the instruction, the print content description data generation unit 107 generates, in the print content description language known as XHTML-Print, the print content description data for picture printing the image data recorded on the memory card 101.

For example, assuming that the filename of the image data recorded on the memory card 101 is PHOTO1.JPG. In this case, the print content description data generation unit 107 generates a print content description data which includes an access path [img src="http://192.168.0.2/memorycard/PHOTO1.JPG" alt="PHOTO1" /] to the image data [PHOTO1.JPG], as shown in FIG. 4.

Here, [http://192.168.0.2/memorycard/] represents a path for accessing a root directory of a file system within the memory card 101 inserted in the memory card slot 102, from an external device connected to the digital television 100. Furthermore, [PHOTO1.JPG] represents an image file (image data) existing in the root directory of the memory card 101.

This print content description data is sent to the printer 200 through the communication unit 108 of the digital television 100, and received through the communication unit 201 of the printer 200.

The communication unit 201 of the printer 200 sends the received print content description data to the print content description data analysis unit 202. The print content description data analysis unit 202 extracts the respective elements and properties described in the print content description data, and sends the analysis result for these to the layout unit 203.

The layout unit 203 starts the layout processing. To be specific, the layout unit 203 judges, with respect to all the elements received from the print content description data analysis unit 202, whether or not an element needs to refer to an external file (S1). In the case where it is judged that the element needs to refer to an external file (Yes, in S1), the access path to such external file is extracted (S3) and sent to the filename judgment unit 205. For example, when the access path to an image file is shown, as in an element described with an <img> tag, and an element that needs to refer to such image file is found, an access path [http://192.168.0.2/memorycard/PHOTO1.JPG] is extracted and sent to the filename judgment unit 205.

The filename judgment unit 205 extracts, from the access path, the filename of the file to be referred to (S4). Here, as the access path is [http://192.168.0.2/memorycard/PHOTO1.JPG], a filename of [PHOTO1.JPG] is extracted.

Next, the filename judgment unit 205 judges whether or not the extracted filename is [_UPDATE.JPG] (S5). Here, as a filename [PHOTO1.JPG] is extracted, it is judged that the extracted filename is not [_UPDATE.JPG] (No, in S5). Consequently, in this case, the access path is sent to the communication unit 201, and the obtainment request for the corresponding image file [PHOTO1.JPG] is performed (S7).

The aforementioned operation is performed with respect to all elements (S2).

Following the access path sent from the filename judgment unit 205, the communication unit 201 accesses [http://192.168.0.2/memorycard/PHOTO1.JPG] and obtains the image file [PHOTO1.JPG]. When the obtainment of the image file is successful, such image file is sent to the image data development unit 204.

The image data development unit 204 performs image data format analysis, obtainment of size information, decoding of the image data, and so on. The information obtained by the image data development unit 204 is sent to the layout unit 203.

Using the information from the image data development unit 204 and the analysis result from the print content description data analysis unit 202, the layout unit 203 generates information needed to generate print data, and sends this to the print data generation unit 208. The print data generated by the print data generation unit 208 is sent to the printing unit 209 and, upon receiving the print data, the printing unit 209 outputs such print data onto paper.

Thus, the operation in which the image data recorded on the memory card 101 inserted in the digital television 100 is printed out from the printer 200 is explained up to this point.

Next, the operation for updating the firmware of the printer 200 shall be explained. Note that in the following explanation, detailed explanation is omitted for parts which are the same as in the aforementioned operation for printing the image data [PHOTO1.JPG].

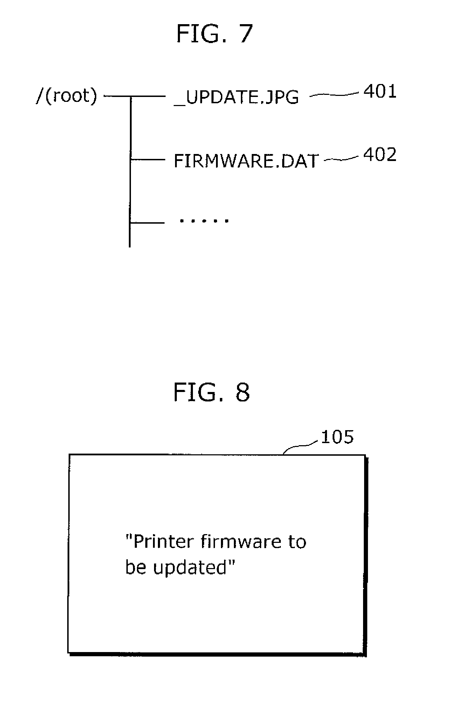

FIG. 7 is a diagram showing an example of the directory structure inside the memory card. Here, it is assumed that two items, namely image data 401 with a filename [_UPDATE.JPG] and firmware data 402 with a filename [FIRMWARE.DAT] are recorded within the same directory (for example, inside the root directory) inside the memory card 101.

It goes without saying that the number of data recorded inside the memory card is not limited. Furthermore, the format of image data need not be the JPEG format. In other words, as long as it is possible for the application program execution unit 106 of the digital television 100 to display on the image display unit 105, and give a print instruction to the printer 200, any format is acceptable.

FIG. 8 is a diagram showing an appearance of a display of the image display unit 105 of the digital television 100. More specifically, when the user inserts the memory card 101 into the memory card slot 102 of the digital television 100, the application program execution unit 106 displays the image data [_UPDATE.JPG] on the image display unit 105. With this, a message "Printer firmware to be updated" is displayed on the image display unit 105, as shown in FIG. 8. The details of the image data [_UPDATE.JPG] need not be limited to the aforementioned message as long as they are details regarding firmware updating.

Here, in the case where updating of the firmware of the printer 200 is desired, the user instructs the application program execution unit 106 to perform picture printing of the image file [_UPDATE.JPG]. With this, the application program execution unit 106 instructs the print content description data generation unit 107 to generate print content description data for picture printing.

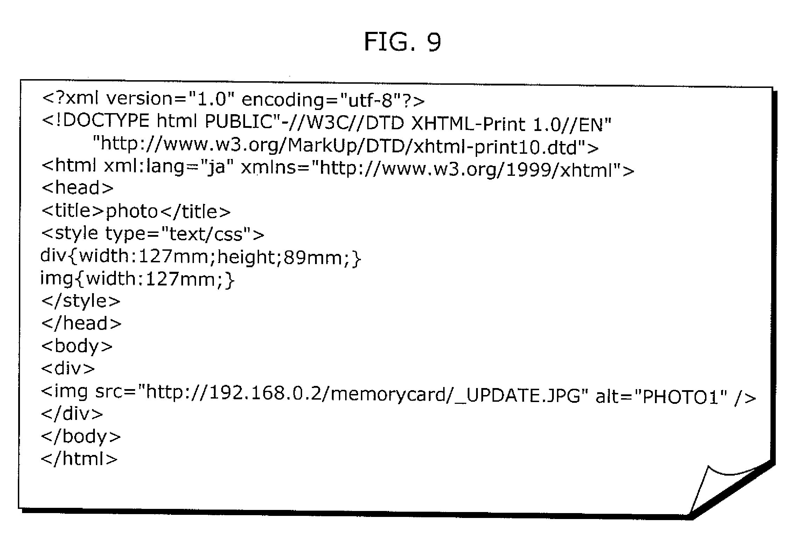

FIG. 9 is a diagram showing an example of print content description data written in XHTML-Print. More specifically, upon receiving the instruction from the application program execution unit 106, the print content description data generation unit 107 generates the print content description data for printing the image file [_UPDATE.JPG], and sends the generated print content description data to the printer 200.

The print content description data is sent to the print content description data analysis unit 202 of the printer 200, and the analysis result is sent to the layout unit 203. The layout unit 203 extracts the access path [http://192.168.0.2/memorycard/_UPDATE.JPG], and sends this extracted access path to the filename judgment unit 205.

The filename judgment unit 205 extracts, from the access path, the filename of the file to be referred to (S4). Here, as the access path is [http://192.168.0.2/memorycard/_UPDATE.JPG], a filename of [_UPDATE.JPG] is extracted.

Next, the filename judgment unit 205 judges whether or not the extracted filename is [_UPDATE.JPG] (S5). Here, as a filename [_UPDATE.JPG] is extracted, it is judged that the extracted filename is [_UPDATE.JPG] (Yes, in S5).

Consequently, the filename judgment unit 205 rewrites the filename portion [_UPDATE.JPG] in the access path [HYPERLINK "http://192.168.0.2/memorycard/#UPDATE.JPG" http://192.168.0. 2/memorycard/_UPDATE.JPG] with [FIRMWARE.DAT]. Then, an access path [http://192.168.0.2/memorycard/FIRMWARE.DAT] is sent to the communication unit 201, and an obtainment request for the file [FIRMWARE.DAT] is performed (S6).

Following the access path [http://192.168.0.2/memorycard/FIRMWARE.DAT] from the filename judgment unit 205, the communication unit 201 obtains the file [FIRMWARE.DAT], and sends the obtained file [FIRMWARE.DAT] to the firmware updating unit 206. The firmware updating unit 206 writes firmware data [FIRMWARE.DAT] into the ROM inside the control unit 207, and updates the firmware.

Moreover, in the case where the obtainment of the [FIRMWARE.DAT] file fails, the image file [_UPDATE.JPG] is obtained by the communication unit 201. Subsequently, the process for printing the image data [_UPDATE.7PG] is continued. In this manner, when obtainment of firmware data fails, the user immediately becomes aware of the firmware updating failure as the image data [_UPDATE.JPG] is printed out.

As explained above, in the first embodiment, when the printer 200 is instructed to print the image data having the special filename, such instruction is handled by the printer 200 as a firmware updating command. In this manner, without making any changes to the functions of the printing application already equipped in the digital television 100, the firmware of the printer 200 can be updated using such printing application. Stated differently, it is possible to update the firmware of the printer 200 using the digital television 100 which is completely unaware of circumstances regarding the firmware updating.

In this manner, according to the first embodiment, the firmware of the printer 200 can be updated by having the digital television 100 instruct the printer 200 to print out image data. With this, even in the case where a PC does not exist in the network, a UI for updating firmware is not provided, there is no connection to an external network such as the Internet, and a means for reading a recording medium is not provided, it is possible to update the firmware of the printer 200.

Moreover, although the digital television 100 is exemplified as the device giving the print instruction to the printer 200, the present invention is not limited to such arrangement. For example, other devices, such as a DVD recorder, a PDA, a digital camera, and a mobile phone, may be adopted as long as the print instruction can be given to the printer 200.

Furthermore, although the case in which both the device giving the print instruction to the printer 200 and the device in which image data and firmware data exist is the digital television 100 is exemplified here, the present invention is not limited to such. More specifically, it may be possible to adopt a structure in which the printer 200 obtains image data and firmware data existing in a device which is different from the device giving the print instruction to the printer 200. Needless to say, the different device mentioned here and the printer 200 may be connected via the Internet.

Furthermore, although a structure in which the print content description data generating function is provided in the digital television 100 is exemplified here, the present invention is not limited to such structure. More specifically, it is also possible to adopt a structure in which the print content description data generation unit 107 is included in the printer 200. In this case, the filename and access path of image data and firmware data may be transmitted from the digital television 100 to the printer 200. In this manner, print content description data is generated in the printer 200, and the same processing as that previously mentioned can be carried out.

Furthermore, although it is assumed here that the digital television 100 and the printer 200 communicate over the Internet (registered trademark) using TCP/IP and HTTP, the means for communication is not limited to such. For example, both sides may communicate through IEEE1394, or communicate using USB, or communicate using an exclusive line.

Furthermore, although a structure which adopts XHTML-Print as the print content description language is exemplified here, the present invention is not limited to this structure. In other words, as long as it is a description language that can be analyzed by the printer 200, the same effect can be obtained even if a different description language is adopted.

Furthermore, although in the previous explanation, the filename judgment unit 205 judges whether or not a filename is the special filename [_UPDATE.JPG], such judgment may be performed by the print content description data analysis unit 202. In this case, the filename judgment unit 205 judges that the firmware should be updated in the case where analysis by the print content description data analysis unit 202 indicates that a description stating that the image data with a special filename [_UPDATE.JPG] should be obtained is included in the print content description data. On the other hand, the filename judgment unit 205 judges that the firmware should not be updated in the case where the analysis by the print content description data analysis unit 202 indicates that a description stating that the image data with the special filename [_UPDATE.JPG] should be obtained is not included in the print content description data. In this manner, even when the print content description data analysis unit 202 judges whether or not a filename is the special filename [_UPDATE.JPG], the same effect can be obtained.

### (Second Embodiment)

Next, the second embodiment shall be explained. Likewise, in the second embodiment, explanation is carried out exemplifying a setting in which firmware of a printer is updated using a printing application equipped in a digital television.

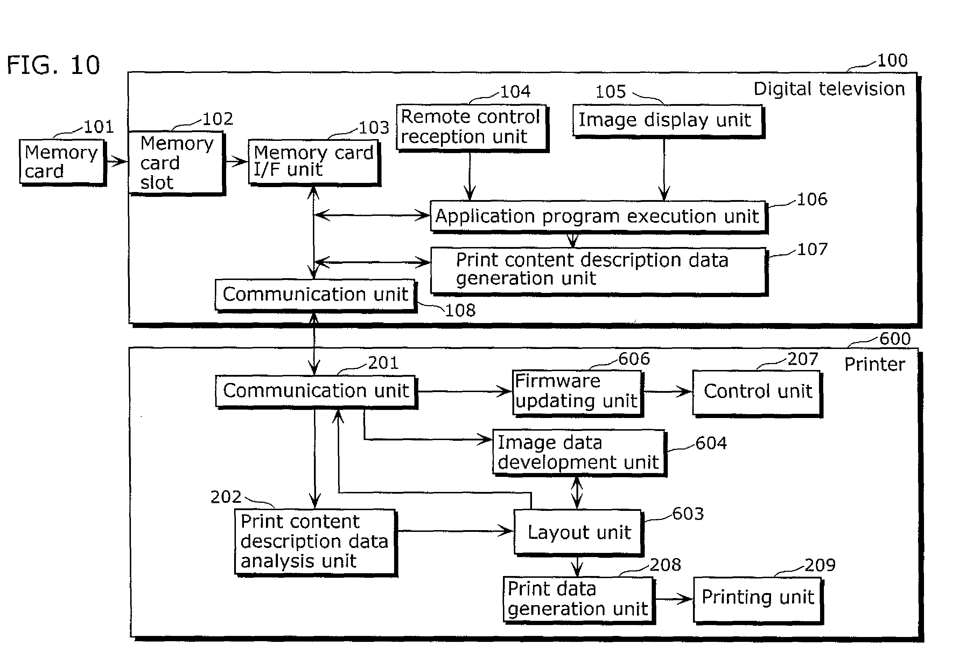

FIG. 10 is a function block diagram of a printing system in the second embodiment. As the structure is approximately the same as in the first embodiment, the same reference numbers are assigned to component elements which are the same as in FIG. 3 and their explanation shall be omitted. The difference with the first embodiment lies in the point in which a flow of data from an image data development unit 604 to a firmware updating unit 606 is added, and the point in which the print content description data analysis unit 202 does not exist. In addition, the image data development unit 604 is equipped with a function for analyzing a special JPEG file.

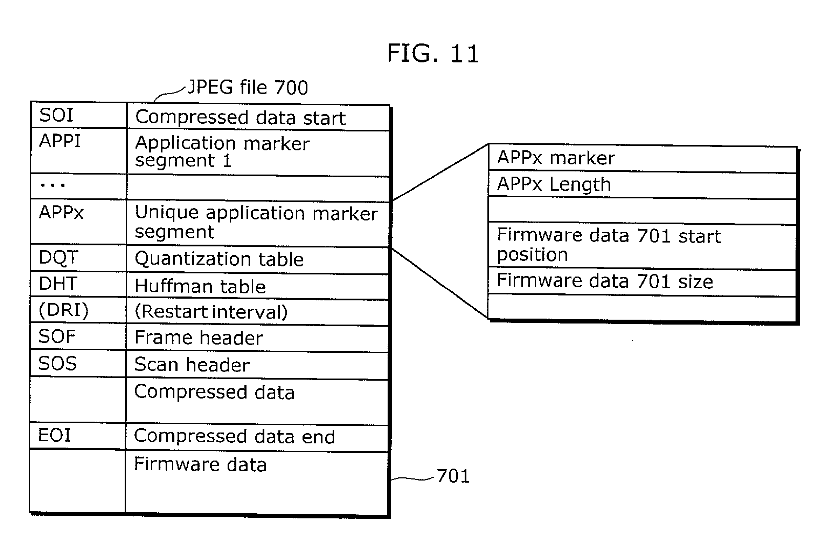

FIG. 11 is a diagram showing the structure of the special JPEG file in the second embodiment. More specifically, a unique application marker segment APPx is added to a JPEG file 700. In addition, firmware data 701 for a printer 600 is added after an EOI marker of the entire JPEG file 700.

Inside the unique application marker segment APPx, information such as the start position of the firmware data 701 and the size of the firmware data 701 are recorded. The start position of the firmware data 701 can be indicated by the offset position from the file head.

Moreover, the rest of the compressed image data and markers, apart from those mentioned above, may be anything that follows the normal JPEG file format. Furthermore, the JPEG file 700 may have any filename.

Now, such a special JPEG file 700 is recorded in the memory card 101, and the memory card 101 is inserted in the memory card slot 102 of the digital television 100. With this, the application program execution unit 106 of the digital television 100 is executed, and image data of the JPEG file 700 is displayed on the image display unit 105.

Details of the image data of the JPEG file 700 is the same as in the image data [_UPDATE.JPG] in the first embodiment. In other words, as shown in FIG. 8, a message "Printer firmware to be updated" is displayed on the image display unit 105. At this point, as the operation of the digital television 100 after the instruction to print, with regard to the JPEG file 700, is the same as in the first embodiment, explanation is omitted here.

The printer 600 obtains the JPEG file 700 using the same procedure as in the first embodiment, after analyzing the print content description data. Here, as there is no filename judgment unit included in the printer 600 in the second embodiment, a layout unit 603 sends the access path to the external file directly to the communication unit 201. Accordingly, upon receiving the JPEG file 700, the communication unit 201 sends the JPEG file 700 to the image data development unit 604.

The image data development unit 604 verifies that the file format is the JPEG format, and judges whether or not the unique application marker segment APPx is present. Here, when the unique application marker segment APPx does not exist, the normal image printing process is carried out as explained in the first embodiment. On the other hand, when a unique application marker segment APPx exists, the inside of the unique application marker segment is analyzed, the start position and data size of the firmware data 701 are obtained, and the firmware data 701 is extracted from the JPEG file 700. The extracted firmware data 701 is sent to the firmware updating unit 606, and the firmware updating unit 606 updates the firmware.

As explained above, in the second embodiment, when the printer 600 is instructed to print the special JPEG file 700, such instruction is handled by the printer 600 as a firmware updating command. In this manner, without making any changes to the functions of the printing application already equipped in the digital television 100, the firmware of the printer 600 can be updated with the use of such printing application, as in the first embodiment. Stated differently, it is possible to update the firmware of the printer 600 using the digital television 100 which is completely unaware of circumstances regarding the firmware updating.

In this manner, likewise, according to the second embodiment, it is possible to update the firmware of the printer 600 by having the digital television 100 instruct the printer 200 to print out image data. With this, even in the case where a PC does not exist in the network, a UI for updating firmware is not provided, there is no connection to an external network such as the Internet, and a means for reading a recording medium is not provided, it is possible to update the firmware of the printer 600.

Moreover, although the second embodiment, as in the first embodiment, exemplifies a pull-type printer which first receives print content description data, then afterwards obtains image data, the present invention is not limited to such. More specifically, the present invention can also be applied even in a push-type printer which, upon receiving image data first, directly prints out the image data.

Thus, a system in which a printer printing image data obtained from an external source updates its own firmware is described in the first embodiment and the second embodiment, as the best mode for carrying out the present invention. However, the embodiments of the present invention are not limited to these.

First, the process executed by the printer is not limited to firmware updating. For example, it is also possible that when there is an obtainment request for a file of a specific filename, the printer's internal information is printed out, and parameters characterizing the operation of the printer are updated.

Furthermore, although a system configured from a printer and a digital television is exemplified, the present invention is not limited to such. For example, it is also possible that when audio data having a specific filename is sent, from an external device, to an audio data reproduction apparatus, the firmware of such audio data reproduction apparatus is updated.

Furthermore, although the setting in which the printer receiving the firmware data updates its own firmware is exemplified, it is also possible to update the firmware of a printer which is different from the printer which receives the firmware data. Furthermore, instead of a printer, it is also possible to update the firmware of a digital home appliance, such as a television, a recording playback apparatus, a game machine, a refrigerator, a microwave oven, a washing machine, an IP phone, and a home gateway, which is connected via a network. Apart from digital home appliances, it is also possible to update the firmware of an embedded device capable of communication with the printer.

Apart from the control unit and the printing unit, the respective components in the printer in the first embodiment and the second embodiment may be realized as a full-custom LSI (Large Scale Integration), or as a semi-custom LSI such as ASIC (Application Specific Integrated Circuit). Furthermore, they may also be realized as circuit information having locations and wiring determined by logic synthesis from a program (hereinafter referred to as HDL program) written in a hardware description language such as VHDL (Very high speed integrated circuit Hardware Description Language), Verilog-HDL, and SystemC, or as a programmable logic device such as an IP core based FPGA (Field Programmable Gate Array) and CPLD (Complex Programmable Logic Device), or as a dynamic reconfigurable device having a dynamically rewritable circuit structure. Furthermore, the HDL program, the circuit information, or the IP core may be recorded on computer-readable recording medium such as an optical recording medium (for example, a CD-ROM and the like), a magnetic recording medium (for example, a hard disc and the like), a magneto-optical medium (for example, MO and the like), and a semiconductor memory (for example, a ROM and the like) and downloaded, via a download cable, onto a programmable logic device in another computer. Furthermore, the HDL program, the circuit information, or the IP core may be recorded on a computer-readable recording medium such as a hard disk equipped in a generic hardware system of a computer or the like which is connected via a network, and downloaded, via a download cable, onto a programmable logic device in another computer which reads such HDL program, circuit information, or IP core via a transmission path such as a network. Furthermore, the circuit information having locations and wiring determined by logic synthesis from the HDL program, or the IP core may be recorded in a serial ROM and downloaded directly onto the FPGA.

Moreover, apart from the control unit and the printing unit, the respective components in the printer in the first embodiment and the second embodiment may be realized, for example, as a software program executed in a computer such as a print server and the like. Furthermore, such software program may be recorded on computer-readable recording medium such as an optical recording medium (for example, a CD-ROM and the like), a magnetic recording medium (for example, a hard disc and the like), a magneto-optical medium (for example, MO and the like), and a semiconductor memory (for example, a ROM and the like) and executed in another computer. Furthermore, such software program may be recorded on computer-readable recording media such as a hard disk equipped in a generic hardware system of a computer, or the like, which is connected via a network, and executed on another computer which reads such program via a transmission path such as a network.

### Industrial Applicability

The present invention may also be applied to applications for printers and digital home appliances that require updating of firmware.

## Claims

1. A printing apparatus connected to an external device that can instruct printing of image data, said printing apparatus comprising:
an obtainment unit operable to obtain at least one of image data and firmware data, the firmware data being required for updating firmware;
a judgment unit operable to judge whether to update firmware or to print image data; and
an execution unit operable to update the firmware using the firmware data obtained by said obtainment unit, in the case where said judgment unit judges that the firmware should be updated, and operable to print the image data obtained by said obtainment unit, in the case where said judgment unit judges that the image data should be printed.

2. The printing apparatus according to Claim 1, further comprising:
a reception unit operable to receive, from said external device, print content description data which is data written in a language that can be analyzed by said printing apparatus; and
an analyzing unit operable to analyze the print content description data,
wherein said judgment unit is operable to judge that the firmware should be updated in the case where the analysis by said analyzing unit indicates that a description stating that image data having a special filename should be obtained is included in the print content description data, and operable to judge that the image data should be printed in the case where the analysis by said analyzing unit indicates that a description stating that image data having a special filename should be obtained is not included in the print content description data, and
said obtainment unit is operable to obtain firmware data having a predetermined filename instead of the image data having the special filename in the case where it is judged that the firmware should be updated, and operable to obtain image data having a filename described in the print content description data in the case where it is judged that the image data should be printed.

3. The printing apparatus according to Claim 2,
wherein said obtainment unit is operable to derive an access path to the firmware data having the predetermined filename, using an access path to the image data having the special filename.

4. The printing apparatus according to Claim 2,
wherein said execution unit is operable to print the image data having the special filename in the case where the obtainment of the firmware data having a predetermined filename fails.

5. The printing apparatus according to Claim 2,
wherein the image data having the special filename is image data regarding firmware updating.

6. The printing apparatus according to Claim 1, further comprising:
a reception unit operable to receive, from said external device, print content description data which is data written in a language that can be analyzed by said printing apparatus; and
an analyzing unit operable to analyze the print content description data,
wherein said obtainment unit is operable to obtain image data in the case where the analysis of said analyzing unit indicates that a description stating that the image data should be obtained is included in the print content description data, and
said judgment unit is operable to judge that the firmware should be updated in the case where firmware data is added in the obtained image data, and operable to judge that the obtained image data should be printed in the case where firmware data is not added in the obtained image data.

7. A firmware updating method for use in a printing apparatus to update firmware of the printing apparatus, the printing apparatus being connected to an external device that can instruct printing of image data, said method comprising:
an obtainment step of obtaining at least one of image data and firmware data, the firmware data being required for updating firmware;
a judgment step of judging whether to update the firmware or to print the image data; and
an execution step of updating the firmware using the firmware data obtained in said obtainment step, in the case where it is judged in said judgment step that the firmware should be updated, and printing the image data obtained in said obtainment step, in the case where it is judged in said judgment step that the image data should be printed.

8. The firmware updating method according to Claim 7, further comprising:
a reception step of receiving, from said external device, print content description data which is data written in a language that can be analyzed by said printing apparatus; and
an analyzing step of analyzing the print content description data,
wherein in said judgment step, it is judged that the firmware should be updated in the case where the analysis in said analyzing step indicates that a description stating that image data having a special filename should be obtained is included in the print content description data, and it is judged that the image data should be printed in the case where the analysis in said analyzing step indicates that a description stating that image data having a special filename should be obtained is not included in the print content description data, and
in said obtainment step, firmware data having a predetermined filename is obtained instead of the image data having the special filename in the case where it is judged that the firmware should be updated, and image data having a filename described in the print content description data is obtained in the case where it is judged that the image data should be printed.

9. The firmware updating method according to Claim 8,
wherein, in said obtainment step, an access path to the firmware data having the predetermined filename is derived, using an access path to the image data having the special filename.

10. The firmware updating method according to Claim 8,
wherein, in said execution step, the image data having the special filename is printed in the case where the obtainment of the firmware data having a predetermined filename fails.

11. The firmware updating method according to Claim 7, further comprising:
a reception step of receiving, from said external device, print content description data which is data written in a language that can be analyzed by said printing apparatus; and
an analyzing step of analyzing the print content description data,
wherein, in said obtainment step, image data is obtained in the case where the analysis in said analyzing step indicates that a description stating that the image data should be obtained is included in the print content description data, and
in said judgment step, it is judged that the firmware should be updated in the case where firmware data is added in the obtained image data, and it is judged that the obtained image data should be printed in the case where the firmware data is not added in the obtained image data.

12. A printing system for allowing printing of image data from a printing apparatus by executing an application program for image printing installed in an external device,
wherein said printing apparatus includes:
an obtainment unit operable to obtain at least one of image data and firmware data, the firmware data being required for updating firmware;
a judgment unit operable to judge whether to update the firmware or to print the image data; and
an execution unit operable to update the firmware using the firmware data obtained by said obtainment unit, in the case where said judgment unit judges that the firmware should be updated, and operable to print the image data obtained by said obtainment unit, in the case where said judgment unit judges that the image data should be printed.

13. A program for use in a printing apparatus to update firmware of said printing apparatus, the printing apparatus being connected to an external device that can instruct printing of image data, said program causing a computer to execute:
an obtainment step of obtaining at least one of image data and firmware data, the firmware data being required for updating firmware;
a judgment step of judging whether to update the firmware or to print the image data; and
an execution step of updating the firmware using the firmware data obtained in said obtainment step, in the case where it is judged in said judgment step that the firmware should be updated, and printing the image data obtained in said obtainment step, in the case where it is judged in said judgment step that the image data should be printed.
